(19) **Europäisches Patentamt**
**European Patent Office**
**Office européen des brevets**

(11) **EP 2 446 298 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(51) Int Cl.:
*G01S 13/90* *(2006.01)*   *G09B 29/00* *(2006.01)*
*G01S 7/295* *(2006.01)*

(21) Anmeldenummer: **10736599.1**

(22) Anmeldetag: **16.06.2010**

(86) Internationale Anmeldenummer:
**PCT/DE2010/000683**

(87) Internationale Veröffentlichungsnummer:
**WO 2010/149132 (29.12.2010 Gazette 2010/52)**

(54) **VERFAHREN ZUR BESTIMMUNG DER GEOGRAPHISCHEN KOORDINATEN VON BILDPUNKTEN IN SAR BILDERN**

METHOD FOR DETERMINING THE GEOGRAPHIC COORDINATES OF PIXELS IN SAR IMAGES

PROCÉDÉ POUR DÉTERMINER LES COORDONNÉES GÉOGRAPHIQUES DE POINTS D'IMAGE DANS DES IMAGES RSO

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.06.2009 DE 102009030672**

(43) Veröffentlichungstag der Anmeldung:
**02.05.2012 Patentblatt 2012/18**

(73) Patentinhaber: **Airbus Defence and Space GmbH 85521 Ottobrunn (DE)**

(72) Erfinder:
 • BENNINGHOFEN, Benjamin
   85521 Riemerling (DE)
 • KOBAN, Tamer
   93333 Neustadt (DE)
 • STAHL, Christoph
   85123 Karlskron (DE)

(74) Vertreter: **Avenhaus, Beate Airbus Defence and Space GmbH Patentabteilung 81663 München (DE)**

(56) Entgegenhaltungen:
 • GIOVANNI NICO: "Exact Closed-Form Geolocation for SAR Interferometry" IEEE TRANSACTIONS ON GEOSCIENCE AND REMOTE SENSING, IEEE SERVICE CENTER, PISCATAWAY, NJ, US, Bd. 40, Nr. 1, 1. Januar 2002 (2002-01-01) , XP011021925 ISSN: 0196-2892
 • MALLIOT H A: "Geocoding the DTEMS digital terrain matrix and radar image products" AEROSPACE CONFERENCE, 1997. PROCEEDINGS., IEEE SNOWMASS AT ASPEN, CO, USA 1-8 FEB. 1997, NEW YORK, NY, USA, IEEE, US LNKD- DOI:10.1109/AERO.1997.577495, Bd. 4, 1. Februar 1997 (1997-02-01), Seiten 35-47, XP010214686 ISBN: 978-0-7803-3741-1
 • SCHREIER G ET AL: "Parameters For Geometric Fidelity Of Geocoded Sar Products" 19900520; 19900520 - 19900524, 20. Mai 1990 (1990-05-20), Seiten 305-308, XP010001783
 • LOEW ET AL: "Generation of geometrically and radiometrically terrain corrected SAR image products" REMOTE SENSING OF ENVIRONMENT, ELSEVIER, XX LNKD- DOI: 10.1016/J.RSE.2006.09.002, Bd. 106, Nr. 3, 23. Januar 2007 (2007-01-23), Seiten 337-349, XP005856426 ISSN: 0034-4257

- O. MORA, O. AGUSTÍ, M. BARA, A. BROQUETAS: "Direct Geocoding for Generation of Precise Wide-Area Elevation Models with ERS SAR Data" FRINGE '99 -- ADVANCING ERS SAR INTERFEROMETRY FROM APPLICATIONS TOWARDS OPERATIONS, 12. November 1999 (1999-11-12) , XP007915030 Liège
- Achim Roth et al.: "Standard Geocoded Ellipsoid Corrected Images" In: Gunter Schreier: "SAR Geocoding: Data and Systems" 1993, Herbert Wichmann Verlag , Karlsruhe , XP007915046 ISBN: 3-87907-247-7 , Seiten 159-172 das ganze Dokument
- E. Meier et al.: "Precise Terrain Corrected Geocoded Images" In: Gunter Schreier: "SAR Geocoding: Data and Systems" 1993, Herbert Wichmann verlag , Karsruhe , XP007915045 ISBN: 3-87907-247-7 , Seiten 173-185 das ganze Dokument

**Beschreibung**

Die Erfindung betrifft ein Verfahren zur Bestimmung der geographischen Koordinaten von Bildpunkten in SAR Bildern nach den Merkmalen des Patentanspruchs 1.

Die Bestimmung der Position eines Ziels aus großen Entfernungen (20km - 100km) ist bei der Verwendung von SAR-Bildern aufgrund der Fehler in den SAR-Bildern oft ungenau. Die Fehler in den SAR-Bildern rühren typischerweise von Azimuthfehlern und Verzerrungseffekten (Fore-shortening, Layover) her.

Aus US 5,659,318 A ist ein interferometrisches Verfahren bekannt, bei welchem mit Hilfe von zwei räumlich getrennten SAR-Antennen erzeugte Slant-Range Bilder eines Zielgebietes hinsichtlich ihrer Phasendifferenz ausgewertet werden und wobei in Übereinstimmung mit dem Oberbegriff des geltenden Patentanspruchs 1 die Aufnahmeposition der SAR-Bilder bekannt ist.

Zunächst wird kurz die bekannte Koordinatenbestimmung eines Ziels aus einem SAR Bild erläutert:

Grundlage ist der so genannte WGS84 Ellipsoid. Das World Geodetic System 1984 (WGS 84) ist ein geodätisches Referenzsystem als einheitliche Grundlage für Positionsangaben auf der Erde und im erdnahen Weltraum. Es besteht aus

- einer einfachen, dreidimensionalen Bezugsfläche, dem Referenzellipsoid, das der Erdoberfläche grob angepasst ist,
- einem detaillierteren Modell für die von dieser idealisierten Form abweichende Erdfigur, das sogenannte Geoid,
- zwölf über die Erde verteilten Fundamentalstationen, über die der Bezug zwischen diesen Modellen und der Erdkruste durch Angabe von (zeitabhängigen) Koordinaten definiert wird (der sogenannte Reference Frame).

Das System ist die geodätische Grundlage des Global Positioning Systems (GPS), das die Vermessung der Erde und die Orientierung mittels geeigneter Satelliten (NAVSTAR-Statelliten) ermöglicht.

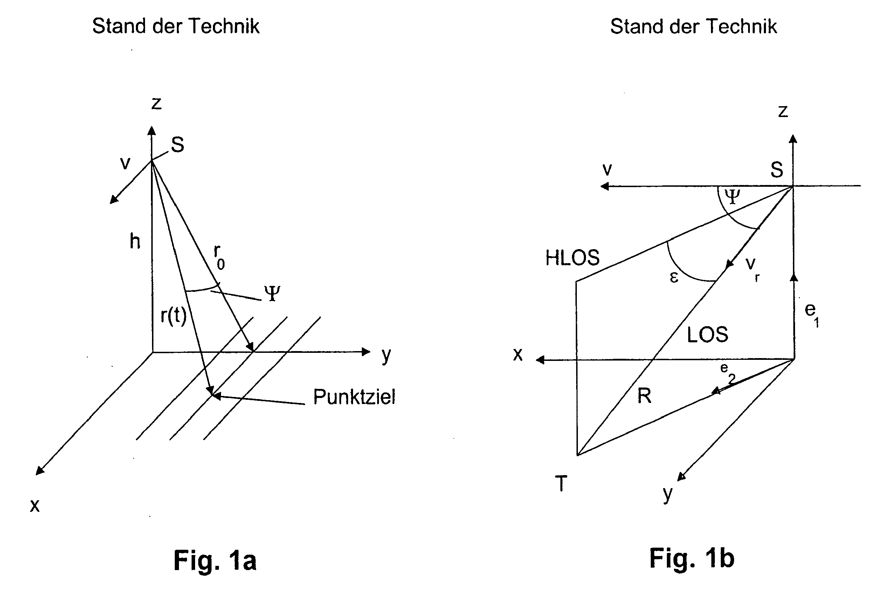

In Fig. 1 sind die wichtigen Größen bei einem SAR definiert. In Teilbild a aus Fig. 1 ist eine typische SAR Konfiguration skizziert. Die Sensorplattform, z.B. ein Flugzeug, bewegt sich in einer Höhe h über dem Boden mit der Geschwindigkeit v entlang der X-Achse. Das Radar bestrahlt seitlich ein Gebiet auf dem Boden. Bei einem SAR ist die optimale Blickrichtung 90° relativ zur Richtung des Geschwindigkeitsvektors v. Davon abweichende Blickrichtungen wirken sich negativ auf die Auflösung sowie den Aufwand zur SAR Bildgenerierung aus. Die Größe der Radarantenne entspricht der realen Apertur. Um die Radarantenne auf der Sensorplattform mitführen zu können, ist sie relativ klein gehalten. Die Größe der Antenne bzw. der Apertur bestimmt jedoch die Auflösung. Je größer die Antenne ist, desto besser ist die Auflösung. Um trotz der kleinen Antenne eine hohe Auflösung zu erreichen wird eine große Antenne künstlich erzeugt. Dies geschieht, indem die Sensorplattform entlang der Apertur einer gedachten großen Antenne fliegt und die reflektierten Radarimpulse an jedem Teilstück der gedachten großen Apertur sammelt. Die Sensorplattform muss also eine synthetische Apertur abfliegen um die Daten für ein SAR Bild zu sammeln. Nach der SAR Prozessierung entsteht aus den gesammelten Daten ein SAR Bild. Auf dem Teilbild b der Fig. 1 sind die wichtigsten SAR Parameter noch einmal genauer dargestellt. S bezeichnet die Position der Sensorplattform und der Vektor v die zugehörige Geschwindigkeit. Das Koordinatensystem ist so gewählt, dass v entlang der positiven X-Achse zeigt. Der Punkt T wird auf die SAR Bildmitte abgebildet. Die Gerade LOS (Line Of Sight) bezeichnet die Verbindungslinie zwischen der Position S der Sensorplattform und dem Punkt T. Die Länge der Gerade LOS entspricht dem Rangegate R des SAR. Die Projektion des Geschwindigkeitsvektors v auf die Gerade LOS ergibt die radiale Annäherungsgeschwindigkeit $v_r$ der Sensorplattform an den Punkt T. Der Winkel $\Psi$ zwischen dem Geschwindigkeitsvektor v und der Geraden LOS wird hier mit Squintwinkel bezeichnet. Die Projektion der Geraden LOS auf eine Ebene, welche durch den Punkt S geht und parallel zu der XY-Ebene ist, ergibt die Gerade HLOS (Horizontal Line Of Sight). Der Winkel $\varepsilon$ zwischen LOS und HLOS wird Elevationswinkel genannt.

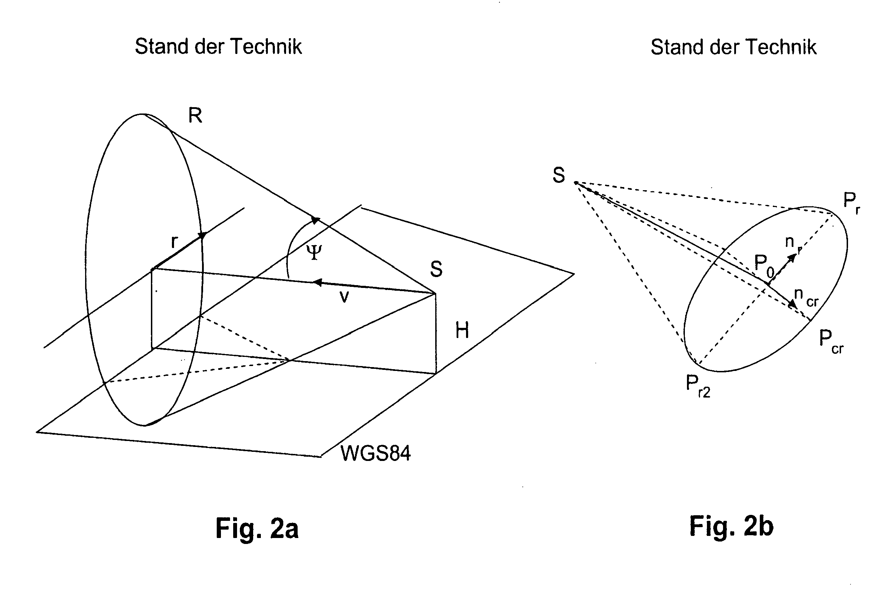

Bei der gewöhnlich Koordinatenbestimmung eines Ziels aus einem SAR Bild wird zunächst die Koordinate des SAR Bildmittelpunktes bestimmt. Danach wird die Koordinate eines Pixels auf dem SAR Bild, welches als Ziel erkannt wurde, berechnet. Um die Koordinaten des Bildmittelpunktes zu bestimmen werden die oben eingeführten SAR Größen verwendet. In Teilbild a der Fig. 2 sind die gewöhnlich für die Koordinatenbestimmung eines Ziels aus einem SAR Bild relevanten Größen dargestellt. Die Sensorplattform S befindet sich in einer Höhe H über dem WGS84 Ellipsoid, welches hier stark vergrößert als Ebene dargestellt ist. Der Geschwindigkeitsvektor v definiert zusammen mit dem Squintwinkel $\Psi$ und dem Abstand R (Rangegate) zum Bildmittelpunkt einen Kegel. Dieser Kegel bestimmt die SAR Konfiguration. Der Fuß des Kegels definiert einen Kreis mit Radius $r = R \sin(\Psi)$. Die geographische Koordinate des SAR Bildmittelpunktes liegt auf dem Schnittpunkt zwischen diesem Kreis und der Erdoberfläche. Auf der Abbildung gibt es zwei Punkte wo der Kreis die Erdoberfläche schneidet. Da aber bekannt ist, in welche Richtung der SAR Sensor blickt kann ein Schnittpunkt bekanntermaßen ausgeschlossen werden.

Nachdem die geographische Koordinate $P_0$ des SAR Bildmittelpunktes berechnet wurde, wird jetzt die geographische Koordinate eines als Ziel erkannten Pixels auf dem SAR Bild berechnet. Die wichtigen Größen hierbei skizziert Teilbild b der Fig. 2. Dazu werden die lokalen auf eins normierten Tangentialvektoren $n_r$ und $n_{cr}$ an das WGS84 Ellipsoid in dem Punkt $P_0$ berechnet. Da die Pixelkoordinaten $p_x$ und $p_y$ relativ zum SAR Bildmittelpunkt bekannt sind kann, unter Zuhilfenahme der bekannten Auflösungen $\delta_x$ und $\delta_y$, der Verschiebungsvektor d vom Punkt $P_0$ zu dem Punkt welcher dem Pixel entspricht wie folgt berechnet werden:

$$\vec{d} = \delta_x p_x \vec{n}_{cr} + \delta_y p_y \vec{n}_r$$

Aus den geographischen Koordinaten des Bildmittelpunktes Po und dem Verschiebungsvektor d kann dann durch einfache Vektoraddition die geographische Koordinate des Zielpixels berechnet werden. Die Berechnung der geographischen Koordinaten des Punktes welcher dem Pixel entspricht ist Stand der Technik und einem Durchschnittsfachmann bekannt.

Bei der aus dem Stand der Technik bekannten Koordinatenbestimmung eines Ziels aus einem SAR Bild, bestimmt der oben beschriebene Kegel die Koordinaten des Ziels mit. Die Lage dieses Kegels im Raum wird jedoch relativ zu dem Geschwindigkeitsvektor bestimmt. Ist dieser Geschwindigkeitsvektor nicht exakt bekannt, so ergibt sich ein Fehler in der Koordinatenbestimmung. Dieser Fehler kann bei gewöhnlichen SAR Systemen in Azimutrichtung, die Richtung des Geschwindigkeitsvektors, bis zu 100 Meter betragen. Zusätzlich wird nach der Bestimmung der geographischen Koordinaten des Bildmittelpunktes angenommen, dass die Zielebene planar ist. Jedoch ergeben SAR typische Effekte wie Foreshortening oder Layover eine Verschiebung des dem Zielpunkt entsprechenden Pixel, was bei der Berechnung des Verschiebungsvektors zu dem Ziel einen zusätzlichen Fehler ergibt.

Aus H.A.Malliot:"Gecoding the DTEMS digital terrain matrix and radar image products", Aerospace Conference '97, Aspen, 1.Februar 197, LNKD-DOI:10.1109/AERO. 1997.577496, Bd. 4, Seiten 35-37, XP010214686, ISB: 978-0-7803-3741-1 ist ein Verfahren bekannt, bei welchem mittels eines SAR-Bildes und dem WGS84 Ellipsoid die geographische Koordinaten berechnet werden.

Aus G.Nico:"Exact Closed- Form Geolocation for SAR Interferometry",IEEE Transaction on Geoscience and Remote Sensing, Bd.40, Nr.1, 1.Januar2002, XP011021925, ISSN:0196-2892 ist ein entsprechendes Verfahren bekannt, bei welchem ein gattungsgemäßes Verfahren bekannt, bei welchem zur Bestimmung der geographischen Koordinaten von korrespondierenden Bildpunkten aus digitalen SAR-Bildern das Rotationshyperboliod der Doppler-Verschiebung verwendet wird.

Aufgabe der Erfindung ist es, ein Verfahren anzugeben, mit welchem der Fehler bei der Positionsbestimmung verringert werden kann.

Diese Aufgabe wird mit dem Verfahren gemäß den Merkmalen des geltenden Patentanspruchs 1 gelöst. Vorteilhafte Ausgestaltungen der Erfindung sind Gegenstand von Unteransprüchen

Erfindungsgemäß wird aus den Koordinaten der korrespondierenden Bildpunkte in den SAR-Bildern und den entsprechenden Range Gates jeweils der Abstand zwischen einer entsprechenden Auflösungszelle am Boden und der jeweiligen Aufnahmeposition des jeweiligen SAR Bildes bestimmt und aus den ermittelten Abständen und den zugehörigen Aufnahmepositionen der SAR Bilder unter

Verwendung eines WGS84 Ellipsoids die geographischen Koordinaten der korrespondierenden Bildpunkte in den SAR-Bildern bestimmt.

Die Erfindung sowie vorteilhafte Ausführungen des erfindungsgemäßen Verfahrens werden im Weiteren anhand von Figuren näher erläutert. Es zeigen:

Fig. 1    schematische Darstellungen zum Prinzip des SAR

Fig. 2    schematische Darstellungen zur aus dem Stand der Technik bekannten Koordinatenbestimmung eines Ziels aus einem SAR Bild,

Fig. 3    eine schematische Darstellung der Entfernungsbestimmung eines Pixels aus einem SAR Bild

Fig. 4    eine schematische Darstellung zum Prinzip der Koordinatenbestimmung eines Ziels aus zwei SAR Bildern gemäß der Erfindung

Fig. 5    eine schematische Darstellung zum Prinzip der Koordinatenbestimmung eines Ziels aus drei SAR Bildern gemäß der Erfindung

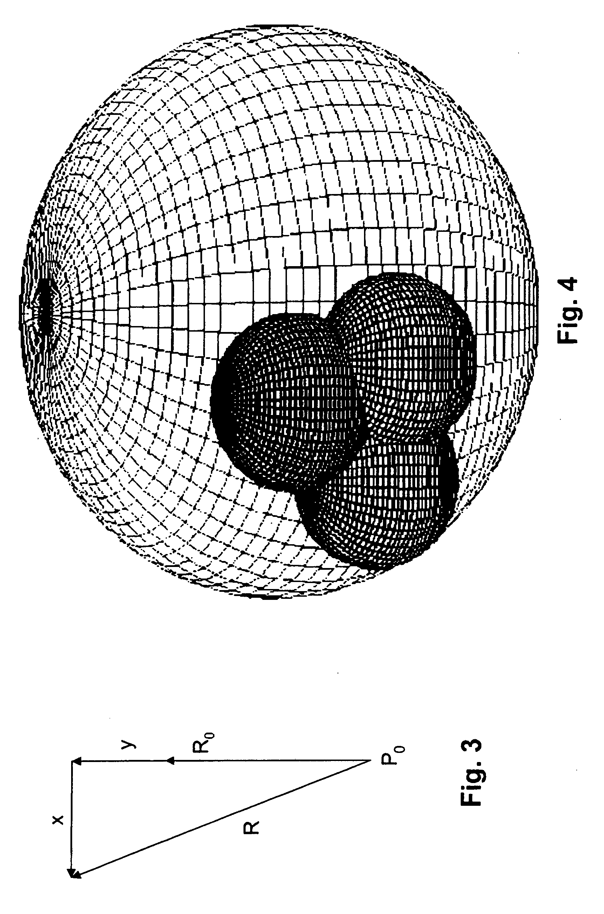

Die Gewinnung der Entfernungsinformation aus einem SAR Bild geht wie folgt. Bei einem SAR System wird für die Bildgenerierung das Rangegate eingestellt. Dieses Rangegate bestimmt die Entfernung zwischen dem SAR Sensor und die dem Mittelpunkt des SAR Slantrange Bildes entsprechende Auflösungszelle auf dem Erdboden. Im folgenden wird dieser Pixel mit Mittenpixel bezeichnet. Wurde ein Pixel als Ziel festgestellt, so kann die Entfernung zu der dem Pixel entsprechenden Auflösungszelle auf dem Boden berechnet werden. Dies ist in Fig. 3 veranschaulicht.

In Fig. 3 ist das Rangegate mit $R_0$ bezeichnet. Den Abstand zu dem Zielpixel bezeichnet R. Wenn die Pixelkoordinaten x und y des Zielpixels relativ zu dem Mittenpixel angegeben werden kann die Entfernung R zu diesem Pixel wie folgt berechnet werden.

$$R = \sqrt{(\delta_x x)^2 + (\delta_y y + R_0)^2} \qquad (1)$$

Die Größen $\delta_x$ bzw. $\delta y$ bezeichnen die Auflösung des SAR Slant Range Bildes in Azimutrichtung bzw. die Auflösung in Rangerichtung.

Koordinatenbestimmung mittels Verwendung von zwei SAR Bildern

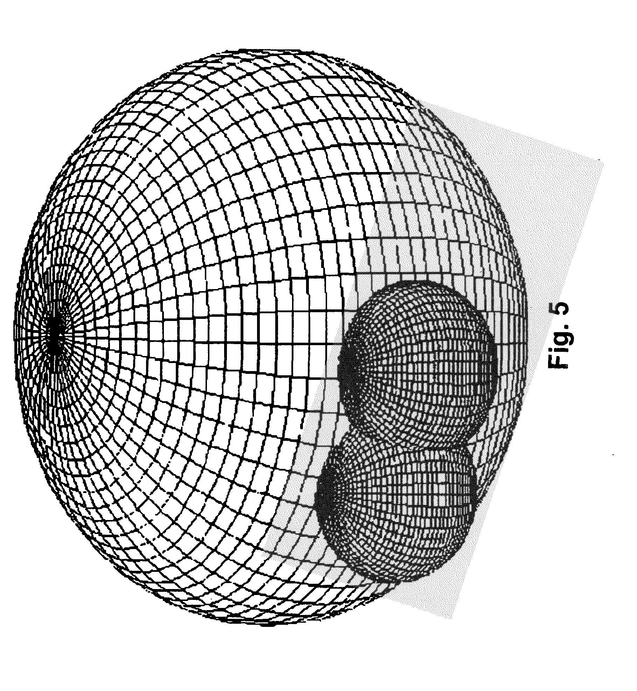

Im folgenden soll jetzt die Koordinatenbestimmung eines Ziels mittels zwei SAR Bildern beschrieben werden. Wenn nur zwei SAR Bilder zur Verfügung stehen können zwei Entfernungsmessungen zu der Auflösungszelle auf dem Boden aus den SAR Slantrange Bildern extrahiert werden. Für eine Koordinatenbestimmung sind jedoch zwei Entfernungsmessungen alleine nicht ausreichend. Deshalb muss bei dieser Methode die zusätzliche Annahme getroffen werden, dass das Ziel auf dem WGS84 Ellipsoid liegt. In Abbildung 5 ist das Prinzip skizziert. Aus den zwei Entfernungen zu dem Ziel und den zugehörigen Positionen, aus denen die Entfernungen gemessen werden, ergeben sich zwei Kugeln. Das Ziel hat die Eigenschaft, dass es auf der Oberfläche der zwei Kugeln und des WGS84 Ellipsoids liegt. Die Aufgabe besteht also darin, die Schnittmenge der drei Flächen zu berechnen. Die Schnittmenge zweier Kugeln ist im Allgemeinen eine Kreislinie im Raum. Die Schnittmenge dieser Kreislinie mit dem WGS84 Ellipsoid besteht im Allgemeinen aus zwei Punkten. Ein Punkt kann aus Plausibilitätsgründen ausgeschlossen werden, da die beiden Punkte für gewöhnlich weit auseinander liegen. Da jedoch die grobe Blickrichtung bei der SAR Bild Aufnahme bekannt ist, kann ein Punkt als Lösung ausgeschlossen werden. Ist die durchschnittliche Höhe im Zielgebiet bekannt, so kann diese Höhe zur Korrektur der Position der dem Zielpixel entsprechenden Auflösungszelle auf dem Boden herangezogen werden.

Das Problem wird durch die nachfolgenden beiden Gleichungen 2 und 3 beschrieben. Hier stehen x, y und z für die gesuchten Koordinaten des Ziels. Die gleichen mit 1 und 2 indizierten Größen bezeichnen die Koordinaten der zwei SAR Bild Aufnahmepositionen. Die zwei zugehörigen Entfernungen zu dem Ziel sind mit $R_1$ und $R_2$ bezeichnet. Die Halbachsen des WGS84 Ellipsoids werden mit a und b bezeichnet. Die Gleichung 3 beschreibt also dass sich das Ziel auf dem WGS84 Ellipsoid befindet.

$$(x - x_1)^2 + (y - y_1)^2 + (z - z_1)^2 = R_1^2$$
$$(x - x_2)^2 + (y - y_2)^2 + (z - z_2)^2 = R_2^2 \qquad (2)$$

$$\frac{x^2}{a^2} + \frac{y^2}{a^2} + \frac{z^2}{b^2} = 1 \qquad (2)$$

Koordinatenbestimmung mittels Verwendung von drei SAR Bildern

Im folgenden soll jetzt die Koordinatenbestimmung eines Ziels mittels drei SAR Bildern beschrieben werden. Bei der Koordinatenbestimmung eines Ziels mit drei SAR Bildern wird die aus den SAR Bildern gewonnene Entfernungsinformation zu dem Ziel benutzt, um die Koordinaten zu berechnen. In Abbildung 4 ist das Prinzip skizziert. Aus den drei Entfernungen zu dem Ziel und den zugehörigen Positionen, aus denen die Entfernungen gemessen werden, ergeben sich drei Kugeln. Das Ziel hat die Eigenschaft, dass es auf der Oberfläche der drei Kugeln liegt. Die Aufgabe besteht also darin die Schnittmenge der drei Kugeln zu berechnen. Die Schnittmenge zweier Kugeln ist im Allgemeinen eine Kreislinie im Raum. Die Schnittmenge dieser Kreislinie mit der dritten Kugel besteht im Allgemeinen aus zwei Punkten. Ein Punkt kann für gewöhnlich aus Plausibilitätsgründen ausgeschlossen werden. Die Geometrie der Koordinatenbestimmung bedingt, dass ein Punkt auf der Erdoberfläche liegt, der andere jedoch weit oberhalb der Erdoberfläche. Da sich das Ziel auf dem Boden befindet kann der Punkt welcher weit oberhalb der Erdoberfläche liegt als Lösung ausgeschlossen werden.

Das Problem wird durch folgende Gleichung 4 beschrieben:

$$(x - x_1)^2 + (y - y_1)^2 + (z - z_1)^2 = R_1^2$$
$$(x - x_2)^2 + (y - y_2)^2 + (z - z_2)^2 = R_2^2 \qquad\qquad (4)$$
$$(x - x_3)^2 + (y - y_3)^2 + (z - z_3)^2 = R_3^2$$

Hier stehen x, y und z für die gesuchten Koordinaten des Ziels. Die gleichen mit 1, 2 und 3 indizierten Größen bezeichnen die Koordinaten der drei SAR Bild Aufnahmepositionen. Die drei zugehörigen Entfernungen zu dem Ziel sind mit $R_1$, $R_2$ und $R_3$ bezeichnet.

**Patentansprüche**

1.  Verfahren zur luftgestützten Bestimmung der geographischen Koordinaten von korrespondierenden Bildpunkten aus digitalen synthetischen Apertur Radar Bildern, wobei die SAR-Bilder als Slant Range Bilder vorliegen und die Aufnahmeposition des jeweiligen SAR Bildes bekannt ist,
    wobei
    aus den Koordinaten der korrespondierenden Bildpunkte in den SAR-Bildern und den entsprechenden Range Gates jeweils der Abstand zwischen einer entsprechenden Auflösungszelle am Boden und der jeweiligen Aufnahmeposition des jeweiligen SAR Bildes bestimmt wird, **dadurch gekennzeichnet, daß** aus den ermittelten Abständen und den zugehörigen Aufnahmepositionen der SAR Bilder unter Verwendung eines WGS84 Ellipsoids die geographischen Koordinaten der korrespondierenden Bildpunkte in den SAR-Bildern bestimmt wird.

2.  Verfahren nach Anspruch 1, **dadurch gekennzeichnet, dass**
    zur Bestimmung der geographischen Koordinaten von korrespondierenden Bildpunkten eine für ein SAR Bild vorgegebene durchschnittliche Höhe eines Zielgebietes verwendet wird.

3.  Verfahren nach Anspruch 1, **dadurch gekennzeichnet, dass**
    zur Bestimmung der geographischen Koordinaten von korrespondierenden Bildpunkten eine für ein SAR Bild vorgegebene Höhenkarte verwendet wird.

4.  Verfahren nach einem der vorangehenden Ansprüche, **dadurch gekennzeichnet, dass**
    zur Bestimmung der geographischen Koordinaten von korrespondierenden Bildpunkten aus digitalen synthetischen Apertur Radar Bildern zwei oder drei SAR Bilder verwendet werden.

**Claims**

1.  Method for the airborne determination of geographical coordinates of corresponding pixels from digital synthetic aperture radar images, wherein the SAR images are present as slant range images and the recording position of the respective SAR image is known, wherein in each case the distance between a particular resolution cell on the ground and the respective recording position of the respective SAR image is determined from the coordinates of the corresponding pixels in the SAR images and the corresponding range gates, **characterized in that** the geographical coordinates of the corresponding pixels in the SAR images are determined from the ascertained distances and the associated recording positions of the SAR images using a WGS84 ellipsoid.

2.  Method according to Claim 1, **characterized in that** a target area mean elevation specified for a SAR image is used to determine the geographical coordinates of corresponding pixels.

3.  Method according to Claim 1, **characterized in that** an elevation map specified for a SAR image is used to determine the geographical coordinates of corresponding pixels.

4.  Method according to one of the preceding claims, **characterized in that** two or three SAR images are used to determine the geographical coordinates of corresponding pixels from digital synthetic aperture radar images.

**Revendications**

1. Procédé de détermination aéroportée des coordonnées géographiques de points d'image correspondants à partir d'images de radar à ouverture synthétique numérique, les images RSO prenant la forme d'images de distance oblique et la position de prise de l'image RSO respective étant connue ;
la distance entre une ligne de résolution correspondante prévue au niveau du sol et la position de prise respective de l'image RSO respective étant respectivement déterminée à partir des coordonnées des points d'image correspondants dans les images RSO et les portes en distance correspondantes ;
**caractérisé en ce que** les coordonnées géographiques des points d'image correspondants dans les images RSO sont déterminées à partir des distances calculées et des positions de prise associées des images RSO en utilisant un ellipsoïde WGS84.

2. Procédé selon la revendication 1, **caractérisé en ce que** pour déterminer les coordonnées géographiques de points d'image correspondants, on utilise une hauteur de territoire visé moyennée prédéfinie pour une image RSO prédéfinie.

3. Procédé selon la revendication 1, **caractérisé en ce que** pour déterminer les coordonnées géographiques de points d'image correspondants, on utilise une carte de hauteur prédéfinie pour une image RSO.

4. Procédé selon l'une quelconque des revendications précédentes, **caractérisé en ce que** pour déterminer les coordonnées géographiques de points d'image correspondants provenant d'images de radar à ouverture synthétique numérique, on utilise deux ou trois images RSO.

Stand der Technik

Fig. 1b

Stand der Technik

Fig. 1a

Stand der Technik

Fig. 2b

Stand der Technik

Fig. 2a

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 5659318 A

**In der Beschreibung aufgeführte Nicht-Patentliteratur**

*   **H.A.MALLIOT.** Gecoding the DTEMS digital terrain matrix and radar image products. *Aerospace Conference '97, Aspen,* 01. Februar 1997, vol. 4, ISBN 978-0-7803-3741-1, 35-37

*   **G.NICO.** Exact Closed- Form Geolocation for SAR Interferometry. *IEEE Transaction on Geoscience and Remote Sensing,* 01. Januar 2002, vol. 40 (1), ISSN 0196-2892